# EUROPÄISCHE PATENTSCHRIFT

(11) **EP 0 577 796 B1**
(45) Veröffentlichungstag und Bekanntmachung des Hinweises auf die Patenterteilung: **21.10.1998**
(21) Anmeldenummer: 93902014.5
(22) Anmeldetag: 25.01.1993
(51) Int. Cl.: B23B 31/20, B23Q 16/00

(54) **SPANNZANGENANSCHLAG**
COLLET CHUCK STOP
BUTEE DE PINCE DE SERRAGE

(30) Priorität: 23.01.1992 CH 182/92
(43) Veröffentlichungstag der Anmeldung: 12.01.1994
(73) Patentinhaber: MOSER, Hansjürg, CH-3714 Frutigen (CH)
(72) Erfinder: MOSER, Hansjürg, CH-3714 Frutigen (CH)
(74) Vertreter: Tschudi, Lorenz
(86) Internationale Anmeldenummer: CH9300019
(87) Internationale Veröffentlichungsnummer: WO9314897

(56) Entgegenhaltungen:
- CH-A- 317 977
- FR-A- 2 535 634
- US-A- 2 502 719
- US-A- 2 871 023
- US-A- 2 922 656
- US-A- 3 540 748
- US-A- 3 615 101

## Beschreibung

Die vorliegende Erfindung bezieht sich auf einen Spannzangenanschlag gemäss dem Oberbegriff des unabhängigen Patentanspruches 1 (siehe CH-A-317 977).

Bei einem bekannten Spannzangenanschlag werden durch Einschrauben einer Spannschraube in einen Spannkörper drei regelmässig über den Umfang des Spannkörpers angeordnete, in entsprechenden Oeffnungen gelagerte Kugeln durch die Spannschraube radial nach aussen gedrückt und Verspannen den Spannkörper im Ringbereich der Spannzange. Dadurch wird jedoch dieser Teil der Spannzange verdrückt, wodurch die Spannzange nicht mehr in die Spannhülse eingeschoben werden kann. Aus der EP-A-0 356 575 ist eine Spannvorrichtung für eine Drehmaschine vorbekannt, bei welcher mit einem Schlüssel ein Einsatzstück in eine Einsatzmutter geschraubt wird, was zu Verspannungen der Zange führen kann. Konische Flächen am Ende der Spannzange und am Einsatzstück bewirken ein Verspannen der Zange. An der Einsatzmutter angeordnete, radial nach aussen abstehende Nasen sind so ausgebildet, dass in der Regel nur eine Nase am Ende eines Schlitzes der Spannzange anliegen wird, da die Schlitze bei Spannzangen ungenau gearbeitet sind. Im weiteren bewirkt der schnelle Wechsel des Drehsinnes von links auf rechts bei Drehmaschinen beim Gegenstand der obengenannten Druckschrift, dass sich das Einsatzstück lösen kann. Aus der CH-A-317 977 ist ein Spannzangenanschlag mit einem Spannorgan 13 und radial abstehenden Spannelementen 16 vorbekannt. Es ist ein sich durch das Spannorgan erstreckendes Anschlagmittel 7 für das zu bearbeitende Werkstück 6 vorgesehen. Die Spannelemente sind radial verschiebbar angeordnet. Im weiteren ist ein Arretiermittel 12 zum Arretieren des Anschlagmittels 7 in einer einstellbaren axialen Lage vorgesehen. Beim Gegenstand der D1 arretiert das Arretiermittel 12 nur das Anschlagsmittel 7. Die Hülse 8 kann sich im Betrieb gegen die Hülse 13 verdrehen und löst sich im Gebrauch. Es ist eine Aufgabe der vorliegenden Erfindung, die Nachteile des Standes der Technik zu vermeiden und einen Spannzangenanschlag für eine herkömmliche Spannzange derart auszubilden, dass bei der Bearbeitung des in die Spannzange eingespannten Werkstückes durch die bei der Bearbeitung auftretenden Kräfte der Anschlag für das Werkstück nicht axial verschoben werden kann und die Spannzange durch den Spannzangenanschlag nicht verdrückt oder verspannt wird. Der Spannzangenanschlag soll als Ganzes von hinten in die Spannzange einschiebbar sein. Dies wird erfindungsgemäss durch die Merkmale des unabhängigen Patentanspruches 1 erzielt. Der Gewindestift verhindert ein Verdrehen der Spannschraube gegenüber der Spannscheibe. Im weiteren ist es eine Aufgabe einer Ausführungsform der vorliegenden Erfindung, den Spannzangenanschlag derart auszubilden, dass der Anschlag am Rande aller Schlitze der Spannzange erfolgt, auch wenn die Schlitze ungenau gearbeitet sind. Dies wird dadurch erzielt, dass die Spannelemente an ihren äusseren Enden verjüngt oder konisch ausgebildet sind. Im weiteren ist es eine Aufgabe eines Ausführungsbeispieles der Erfindung, eine auf das Anschlagmittel aufgesetzte Anschlagscheibe oder einen Anschlagbolzen gegen eine axiale Verschiebung zu arretieren. Dies wird erzielt durch eine sich durch das Anschlagmittel erstreckende Druckschraube.

Im folgenden werden anhand der beiliegenden Zeichnung Ausführungsbeispiele der Erfindung sowie deren Verwendung näher beschrieben. Es zeigen
- **Fig. 1**: einen Längsschnitt durch ein erstes Ausführungsbeispiel des Spannzangenanschlages bei der Verwendung von Anschlagscheiben,
- **Fig. 2**: eine Ansicht von links gemäss Fig. 1,
- **Fig. 3**: einen Längsschnitt durch das erste Ausführungsbeispiel bei der Verwendung von Anschlagbolzen,
- **Fig. 4**: einen Längsschnitt durch den hinteren Teil eines zweiten Ausführungsbeispieles.

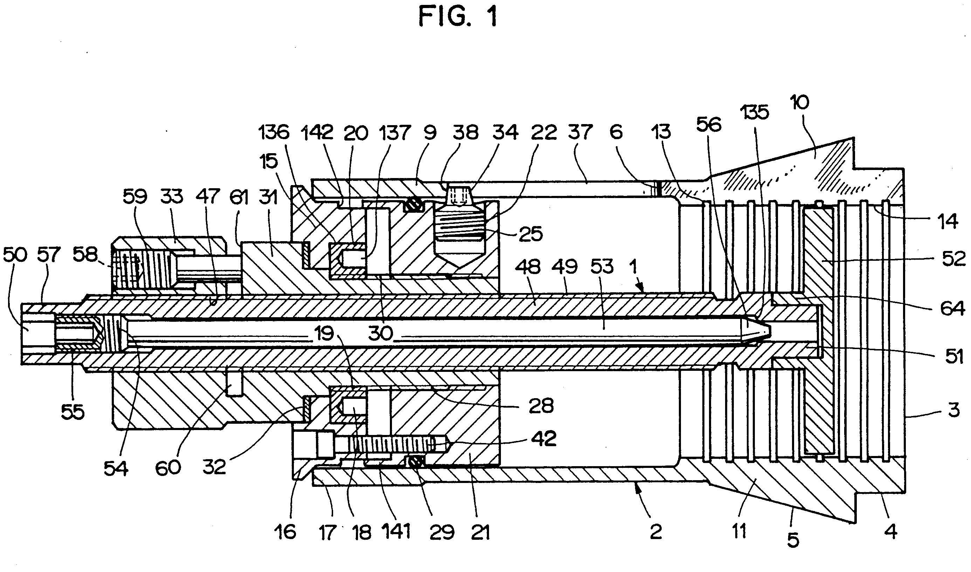

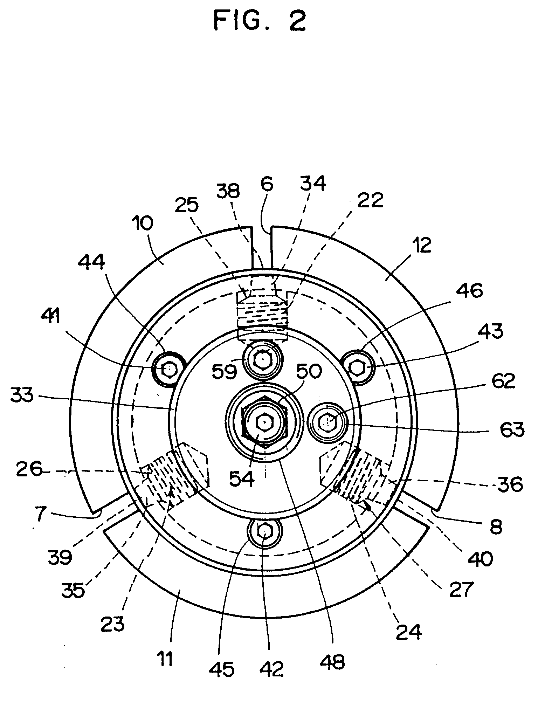

Das erste Ausführungsbeispiel des Spannzangenanschlages wird anhand der Fig. 1 bis 3 beschrieben. Der komplette Spannzangenanschlag 1 wird von hinten in eine Spannzange 2 eingeführt. Die Stirnseite 3 der Spannzange wird gegen den Flansch eines nicht dargestellten Spindelstockes einer Drehmaschine gedrückt, wobei der Flansch in eine Ringausnehmung 4 an der Stirnseite 3 der Spannzange eingreift. Aussen auf der Spannzange 2 sitzt eine ebenfalls nicht dargestellte Spannhülse, die einen inneren Konus umfasst, der gegen einen Konus 5 der Spannzange drückt. Spindelstock, Spannhülse und Spannzange sind aus dem Stand der Technik vorbekannt. Die Spannzange 2 ist mit drei über den Umfang gleichmässig verteilten Schlitzen 6, 7 und 8 versehen, die von der Stirnseite 3 nach hinten verlaufen und bei einem ungeschlitzen Ringbereich 9 enden. Die Spannzange weist vorne drei Spannbacken 10, 11 und 12 auf, die eine mit kreisförmigen Nuten 13 versehene Aufnahmebohrung zur Aufnahme eines nicht dargestellten Werkstückes begrenzen. Der Spannzangenanschlag 1 umfasst eine Spannscheibe 15, die von hinten in die Spannzange 2 eingeführt wird, wobei ein Ansatz 16 der Spannscheibe am hinteren Rand 17 der Spannzange anliegt. In einer ringförmigen Ausnehmung 136 der Spannscheibe 15 ist eine mit zwei axialen Bohrungen 18 und 137 zum Einführen eines Schlüssels versehene, ein Innengewinde 19 aufweisende Ringmutter 20 angeordnet. Im Bereich der Schlitze 6, 7 und 8 ist ein Spannkörper 21 mit einem ringförmigen Ansatz 141 angeordnet, welcher zusammen mit dem kompletten Spannzangenanschlag 1 von hinten in die Spannzange eingeführt wird, wobei beim Einführen des kompletten Spannzangenanschlages 1 drei in gleichmässigem Abstand angeordnete, sich radial erstreckende, mit Gewinden 22, 23 und 24 versehene Gewindebolzen 25, 26 und 27 in den Spannkörper eingeschraubt sind. Der Spannkörper 21 ist mit einem Innengewinde 28 versehen. Der Spannkörper 21 ist an seinem Umfang mit einem O-Ring 29 zum Zurückhalten des Kühlmittels während der Bearbeitung des in die Spannzange eingespannten Werkstückes versehen. Mit der Ringmutter 20 und dem Spannkörper 21 ist eine ein Aussengewinde 30 aufweisende Spannschraube 31 verschraubt. Zwischen der Spannscheibe 15 und der Spannschraube 31 ist eine Distanzscheibe 32 angeordnet. Die Spannschraube 31 weist einen gerändelten Griff 33 zum Verdrehen der Spannschraube 31 gegenüber dem Spannkörper 21 auf. Beim Verdrehen der Spannschraube 31 im Uhrzeigersinn verschiebt sich der Spannkörper 21 nach hinten, also nach links gemäss Fig. 1. Der ringförmige Ansatz 141 des Spannkörpers 21 umgreift beim Verschieben des Spannkörpers 21 einen ringförmigen Absatz 142 der Spannscheibe. Die Gewindebolzen 25, 26 und 27 werden vor dem Anziehen der Spannschraube 31 mit einem Inbusschlüssel soweit aus dem Spannkörper 21 herausgeschraubt, dass sich ihre oberen konischen Enden 34, 35 und 36 im Bereich der Wand 37 der Spannzange befinden. Durch Anziehen der Spannschraube 31 werden die mit einem Innensechskant (Inbus) versehenen konischen Enden 34, 35 und 36 der Gewindebolzen an die hinteren Enden 38, 39 und 40 der Schlitze 6, 7 und 8 gedrückt. Falls die Schlitze ungenau gearbeitet sind, so kann durch Verstellen der Gewindebolzen 25, 26 und 27 infolge der konischen Ausbildung ihrer Enden 34, 35 und 36 erzielt werden, dass die Gewindebolzen überall an den Enden 38, 39 und 40 der Schlitze anliegen. Die Verschiebebewegung des Spannkörpers 21 gegenüber der Spannschraube 31 wird durch drei Zylinderschrauben 41, 42 und 43 geführt. Diese Schrauben sind in den Spannkörper 21 eingeschraubt und bewegen sich in zylindrischen Ausnehmungen 44, 45 und 46 der Spannscheibe 15. Ein Gewindestift 63 mit Innensechskant (Inbus) erstreckt sich, wie aus Fig. 2 ersichtlich, in axialer Richtung durch den hinteren Teil der Spannschraube 31 und drückt auf die Distanzscheibe 32 und sichert dadurch die Spannschraube 31 gegen Lösen. In ein Innengewinde 47 der Spannschraube 31 ist eine Gewindestange 48 mit einem Aussengewinde 49 eingeschraubt. Die Gewindestange 48 ist an ihrem hinteren Ende mit einem Innensechskant (Inbus) 50 zum Verstellen der Gewindestange 48 in der Längsachse versehen. An ihrem vorderen Ende ist die Gewindestange 48 mit einem Absatz 51 versehen, auf welchen Absatz eine Anschlagscheibe 52 aufgesetzt wird. Je nach dem Innendurchmesser der Spannzange zwischen den Spannbacken können Anschlagscheiben für das zu bearbeitende Werkstück mit verschiedenem Durchmesser verwendet werden. Anschlagscheiben 52 werden verwendet, wenn der Durchmesser des Werkstückes grösser als der Durchmesser der Gewindestange ist. In der Längsachse der Gewindestange 48 ist eine Innensechskant-Druckschraube 53 vorgesehen, die mit einem Aussengewinde 54 in ein Innengewinde 55 der Gewindestange eingeschraubt wird. Das konische vordere Ende 56 der Druckschraube presst den vorderen Teil 51 der Gewindestange durch Druckeinwirkung auf einen Innenansatz 135 der Gewindestange etwas auseinander und sichert so die Anschlagscheibe 52 gegen Wegziehen von der Gewindestange, wenn das bearbeitete Werkstück, welches eventuell noch durch einen Oelfilm an der Anschlagscheibe 52 haftet, aus der Spannzange entfernt wird. Das hintere Ende 57 der Gewindestange ist vorzugsweise ebenfalls gerändelt. Durch Verdrehen der Gewindestange 48 wird die gewünschte Anschlagtiefe für das zu bearbeitende Werkstück eingestellt. Mit einem mit einem Innensechskant 58 versehenen Gewindestift 59 kann die Gewindestange 48 gegen Verdrehen gesichert werden. Der Gewindestift verspannt die Spannschraube 31 im Bereich eines Schlitzes 60, indem der Stift auf die hintere Fläche 61 des Schlitzes gedrückt wird.

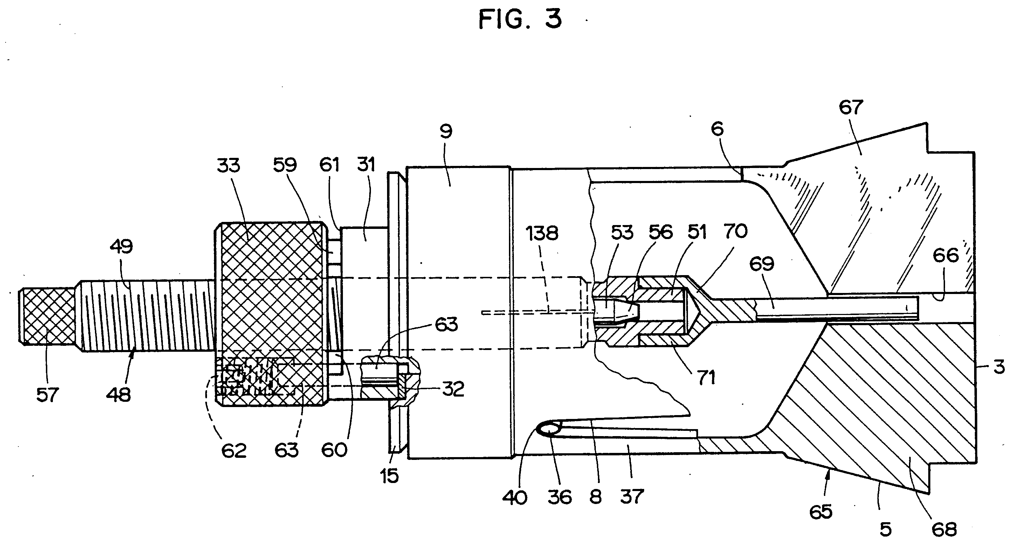

In Fig. 2 ist eine Ansicht von links gemäss Fig. 1 der Spannzange dargestellt. Aus dieser Figur ist zusätzlich noch der mit einem Innensechskant 62 versehene Gewindestift 63 zum Sichern der Spannschraube gegen Lösen dargestellt. Der Gewindestift 63 drückt in der Arretierposition auf die Distanzscheibe 32 (siehe auch Fig. 3). Anstelle von drei Schlitzen 6, 7 und 8 könnte die Spannzange auch vier Schlitze aufweisen. Deshalb sind vorzugsweise am Umfang des Spannkörpers sechs mit Gewinde versehene Bohrungen zur Aufnahme entweder von drei oder von vier Gewindebolzen vorgesehen.

In Fig. 3 ist eine Spannzange 65 mit einer Aufnahmebohrung 66 für Werkstücke mit kleinem Durchmesser dargestellt. Dementsprechend weisen die Spannbacken 67 und 68 auch eine dickere Wandstärke auf. Anstelle der Anschlagscheibe ist ein Anschlagbolzen 69 vorgesehen für Werkstücke mit gleichem oder kleinerem Durchmesser als derjenige der Gewindestange 48. Der Anschlagbolzen 69 weist an seinem hinteren Ende einen konisch verbreiterten Teil 70 auf, an welchen sich eine zylindrische Hülse 71 anschliesst. Die zylindrische Hülse 71 wird auf den Ansatz 51 der Gewindestange 48 gesteckt und mit der Druckschraube 53 gesichert. Im übrigen ist der Spannzangenanschlag gemäss Fig. 3 gleich aufgebaut wie derjenige gemäss den Fig. 1 und 2. Die Gewindestange 48 ist in ihrem, der Anschlagscheibe 52 oder dem Anschlagbolzen 69 zugewandten Bereich mit drei bis zum vorderen Ende des Absatzes 51 reichenden Schlitzen 138 versehen, damit der Absatz 51 zum Halten der Anschlagscheibe oder des Anschlagbolzens gespreizt werden kann.

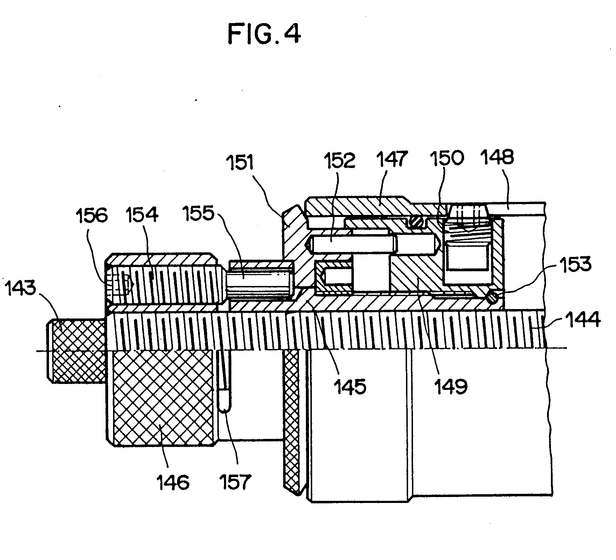

Fig. 4 zeigt einen teilweisen Schnitt durch den hinteren Teil eines zweiten Ausführungsbeispieles eines Spannzangenanschlages. Eine mit einem gerändelten Ende 143 versehene Gewindestange 144 erstreckt sich axial durch die Spannschraube 145 mit dem gerändelten Griff 146. Konzentrisch zur Spannschraube ist in der Spannzange im Ringbereich 147 und teilweise im geschlitzten Bereich 148 ein Spannkörper 149 angeordnet, wobei drei oder vier sich radial erstreckende, mit Gewinden versehene Gewindebolzen 150 in entsprechenden, mit Gewinde versehenen Bohrungen im Spannkörper angeordnet sind. Es sind sechs Bohrungen vorgesehen. Die Gewindebolzen sind derart auf dem Umfang verteilt, dass der Spannzangenanschlag sowohl für eine Spannzange mit drei als auch für eine Spannzange mit vier Schlitzen verwendet werden kann. Auf den hinteren Rand des Ringbereiches 147 ist eine Spannscheibe 151 aufgesetzt. Es sind mehrere Stifte 152 vorgesehen, die sich in entsprechende Oeffnungen in der Spannscheibe 151 und im Spannkörper 149 erstrecken. An dem vom Griff 146 entfernten Ende der Spannschraube 145 ist ein Spannring 153 angeordnet. Die Gewindebolzen 150 sind an ihren in die Schlitze der Spannzange ragenden Enden konisch ausgebildet und weisen an diesem Ende einen Innensechskant auf. Im Griff 146 ist ein parallel sich zur Gewindestange erstreckender Gewindestift 154 eingeschraubt, der an seinem vom stiftförmigen Teil 155 entfernten Ende mit einem Innensechskant 156 zur Verdrehung versehen ist. Im Handgriff ist ein Schlitz 157 vorgesehen, der sich senkrecht zur Längsachse des Spannzangenanschlages erstreckt. Durch Verdrehen des Gewindestiftes 154 drückt der stiftförmige Teil 155 auf die Spannscheibe 151, wodurch die Spannschraube 145 im Bereich des Schlitzes 156 verspannt wird. Dadurch kann die Gewindestange 144 gegen Verdrehen gesichert werden. Im weiteren wird beim Anschlag des stiftförmigen Teiles 155 auf der Spannscheibe 151 die Spannschraube 145 gegen weiteres Verdrehen gesichert. Bei dieser Ausführungsform ist die ganze Spannscheibe 151 gehärtet. Im Gegensatz zur Ausführungsform gemäss den Fig. 1 bis 3 können die beiden Arretiervorgänge mit einem einzigen Gewindestift vorgenommen werden.

Der Spannzangenanschlag gemäss allen Ausführungsformen eignet sich zur Verwendung bei herkömmlichen Spannzangen. Für jeden Spannzangenanschlag kann ein Satz Anschlagscheiben und Anschlagbolzen mit variablem Durchmesser bereitgestellt werden.

## Patentansprüche

1. Spannzangenanschlag mit einem Spannorgan (21; 74; 112) und zum Eingreifen in die Schlitze einer Spannzange bestimmte, radial abstehende Spannelemente (25, 26, 27) und ein sich durch das Spannorgan erstreckendes Anschlagmittel (48) für das zu bearbeitende Werkstück, wobei die Spannelemente (25, 26, 27) radial verschiebbar angeordnet sind und Arretiermittel (59) zum Arretieren des Anschlagmittels in einer einstellbaren axialen Lage vorgesehen sind, dadurch gekennzeichnet, dass die Spannelemente als radial in das als zylinderförmiger Spannkörper (21) ausgebildete Spannorgan einschraubbare Gewindebolzen (25, 26, 27) ausgebildet sind, mindestens eine sich durch den Spannkörper (21) erstreckende Spannschraube (31) vorgesehen ist, wobei eine auf den hinteren Rand (17) einer Spannzange aufsetzbare Spannscheibe (15) vorhanden ist, durch welche Spannscheibe hindurch die Spannschraube (31) geführt ist und ein in den Griff (33, 146) der Spannschraube (31, 145) eingeschraubter Gewindestift (63, 154) zum Sichern der Spannschraube (31, 145) gegen Lösen vorhanden ist.

2. Spannzangenanschlag nach Patentanspruch 1, dadurch gekennzeichnet, dass die äusseren Enden (34, 35, 36) der Gewindebolzen (25, 26, 27) konisch ausgebildet sind.

3. Spannzangenanschlag nach Patentanspruch 1, dadurch gekennzeichnet, dass die Spannschraube (31) mit einem Aussengewinde (30) versehen und in ein Innengewinde (28) des Spannkörpers (21) einschraubbar ist.

4. Spannzangenanschlag nach einem der vorangehenden Patentansprüche, dadurch gekennzeichnet, dass das Anschlagmittel eine in ein Innengewinde (47) der Spannschraube (31) einschraubbare Gewindestange (48) umfasst.

5. Spannzangenanschlag nach Patentanspruch 4, dadurch gekennzeichnet, dass die Gewindestange (48) an ihrem einen Ende einen Absatz (51) sowie mindestens einen Schlitz (138) aufweist.

6. Spannzangenanschlag nach einem der vorangehenden Patentansprüche, dadurch gekennzeichnet, dass das Anschlagmittel (48) hohl ausgebildet ist und in der Längsachse des Anschlagmittels im Hohlraum eine mit einem Gewinde (54) versehene Druckschraube (53) angeordnet ist, welche an einem Ende (56) konisch ausgebildet ist, wobei das konische Ende (56) zum Zusammenwirken mit einem Innenansatz (135) des Anschlagmittels (48) bestimmt ist.

7. Spannzangenanschlag nach einem der vorangehenden Patentansprüche, dadurch gekennzeichnet, dass die Anschlagmittel (48) an ihrem einen Ende mit einer mit einem hohlzylinderförmigen Ansatz (64) versehenen Anschlagscheibe (52) oder mit einem einen hohlzylinderförmigen Ansatz (71) aufweisenden Anschlagbolzen (69) versehen sind.

8. Spannzangenanschlag nach einem der vorangehenden Patentansprüche, dadurch gekennzeichnet, dass die Arretiermittel einen in den Griff (33) der Spannschraube (31) eingeschraubten Gewindestift (59) umfassen, der sich durch einen in der Spannschraube vorgesehenen Schlitz (60) erstreckt.

9. Spannzangenanschlag nach einem der Patentansprüche 1 bis 7, gekennzeichnet durch einen in den Griff (146) der Spannschraube (145) eingeschraubten Gewindestift (154) zum Arretieren des Anschlagmittels (144) und zum Sichern der Spannschraube (145) gegen Lösen, der sich durch einen in der Spannschraube vorgesehenen Schlitz (157) erstreckt und in seiner Arretierposition gegen die Spannscheibe (151) drückt.

## Claims

1. Collet stop having a chucking organ (21; 74; 112) and radially projecting chucking elements (25, 26, 27) intended for engaging in the slots of a collet and a stop means (48) extending through the chucking organ for the workpiece to be machined, the chucking elements (25, 26, 27) being disposed radially displaceably, and locking means (59) being provided for locking the stop means in an adjustable axial position, characterised in that the chucking elements are formed as tapped bolts (25, 26, 27) screwable radially into the chucking organ formed as a cylindrical chucking body (21), at least one clamping screw (31) being provided extending through the chucking body (21), there being a clamping disk (15) placeable on the rear edge (17) of a collet, through which clamping disk the chucking means (31) is guided, and there being a threaded pin (63, 154), screwed into the knob (33, 146) of the clamping screw (31, 145) to secure the clamping screw (31, 145) against loosening.

2. Collet stop according to claim 1, characterised in that the outer ends (34, 35, 36) of the tapped bolts (25, 26, 27) are formed conical.

3. Collet stop according to claim 1, characterised in that the clamping screw (31) is provided with an external threading (30) and is screwable into an internal threading (28) of the chucking body (21).

4. Collet stop according to one of the preceding claims, characterised in that the stop means comprises a threaded rod (48) screwable into an internal threading (47) of the clamping screw (31).

5. Collet stop according to claim 4, characterised in that the threaded rod (48) has at its one end a shoulder (51) as well as at least one slot (138).

6. Collet stop according to one of the preceding claims, characterised in that the stop means (48) is formed hollow, and disposed in the longitudinal axis of the stop means in the hollow space is a setscrew (53) provided with a threading (54), which setscrew is formed conical at one end (56), the conical end (56) being intended for co-operating with an inner projection (135) of the stop means (48).

7. Collet stop according to one of the preceding claims, characterised in that the stop means (48) are provided at their one end with a stop disk (52) provided with a hollow-cylindrical appendage (64) or with a stop bolt (69) having a hollow-cylindrical appendage (71).

8. Collet stop according to one of the preceding claims, characterised in that the locking means comprise a threaded pin (59) screwed into the knob (33) of the clamping screw (31), which threaded pin extends through a slot (60) provided in the clamping screw.

9. Collet stop according to one of the claims 1 to 7, characterised by a threaded pin (154) screwed into the knob (146) of the clamping screw (145) for locking the stop means (144) and for securing the clamping screw (145) against loosening, which threaded pin extends through a slot (157) provided in the tightening screw and presses in its locking position against the clamping disk (151 ).

## Revendications

1. Butée de pince de serrage avec un organe de serrage (21 ; 74 ; 112) et des éléments de serrage (25, 26, 27) radiaux espacés destinés à être engagés dans la fente d'une pince de serrage, et un moyen de butée (48) de la pièce à usiner s'étendant à travers l'organe de serrage, les éléments de serrage (25, 26, 27) sont mobiles radialement et des moyens d'arrêt (59) sont prévus pour arrêter le moyen de butée selon une position axiale déterminée, caractérisée en ce que les éléments de serrage sont constitués de boulons filetés (25, 26, 27) pouvant être vissés radialement dans le corps de serrage (25) de forme cylindrique, formant organe de serrage, au moins une vis de serrage (31) s'étendant à travers le corps de serrage (21) étant prévue, un disque de serrage (15) étant prévu, pouvant être appliqué sur la bordure arrière (17) d'une pince de serrage, la vis de serrage (31) passant au travers du disque de serrage et une pointe filetée (63, 154) étant prévue dans la poignée (33, 146) de la vis de serrage (31, 145) afin d'assurer la vis de serrage (31, 145) contre le desserrage.

2. Butée de pince de serrage selon la revendication 1, caractérisée en ce que les extrémités extérieures (34, 35, 36) des boulons filetés (25, 26, 27) sont coniques.

3. Butée de pince de serrage selon la revendication 1, caractérisée en ce que la vis de serrage (31) est munie d'un filetage extérieur et peut être vissée dans un taraudage (28) du corps de serrage (21).

4. Butée de pince de serrage selon l'une des revendications précédentes, caractérisée en ce que le moyen de butée comprend une tige filetée (48) pouvant être vissée dans un taraudage (47) de la vis de serrage (31).

5. Butée de pince de serrage selon la revendication 4, caractérisée en ce que la tige filetée (48) comprend sur son extrémité un palier (51) ainsi qu'au moins une fente (138).

6. Butée de pince de serrage selon l'une des revendications précédentes, caractérisée en ce que le moyen de butée (48) est creux, une vis de pression (53) munie d'un filetage (54) étant disposée dans l'espace creux, selon l'axe longitudinal du moyen de butée, laquelle est conique à une de ses extrémités (56), l'extrémité conique (56) étant destinée à coopérer à un prolongement intérieur (135) du moyen de butée (48).

7. Butée de pince de serrage selon l'une des revendications précédentes, caractérisée en ce que les moyens de butée (48) sont munis sur une de leurs extrémités, d'un disque de butée (52) muni d'un prolongement cylindrique creux (64) ou d'un boulon de butée (69) présentant un prolongement cylindrique creux (71).

8. Butée de pince de serrage selon l'une des revendications précédentes, caractérisée en ce que les moyens d'arrêt comprennent une pointe filetée (59) vissée dans la poignée (33) de la vis de serrage (31), s'étendant à travers une lente (60) prévue dans la vis de serrage.

9. Butée de pince de serrage selon l'une des revendications 1 à 7, caractérisée en ce qu'une pointe filetée (154), vissée dans la poignée (146) de la vis de serrage (145) afin d'arrêter le moyen de butée (144) et d'assurer la vis de serrage (145) contre le desserrage, s'étend à travers une lente (157) prévue dans la vis de serrage et presse contre le disque de serrage (151) dans sa position d'arrêt.
